(19) Europäisches Patentamt
European Patent Office
Office européen des brevets

(11) **EP 2 963 356 A1**

(12) **DEMANDE DE BREVET EUROPEEN**

(43) Date de publication:
**06.01.2016 Bulletin 2016/01**

(51) Int Cl.:
*F24J 2/46* *(2006.01)*     *F24J 2/48* *(2006.01)*

(21) Numéro de dépôt: **15173705.3**

(22) Date de dépôt: **24.06.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **04.07.2014 FR 1456486**

(71) Demandeur: **COMMISSARIAT A L'ENERGIE ATOMIQUE ET AUX ENERGIES ALTERNATIVES 75015 Paris (FR)**

(72) Inventeurs:
• **KUSIAKU, Koku 38000 GRENOBLE (FR)**
• **SZAMBOLICS, Helga 38000 Grenoble (FR)**

(74) Mandataire: **Reboussin, Yohann Mickaël Noël et al Cabinet Orès 36, rue de St Pétersbourg 75008 Paris (FR)**

(54) **ABSORBEUR SOLAIRE SELECTIF A COUCHE EPAISSE DE PASSIVATION ANTICORROSION ET BARRIERE THERMIQUE POUR DES APPLICATIONS HAUTES TEMPERATURES ET SON PROCEDE DE REALISATION**

(57)     Un absorbeur solaire thermique sélectif apte à fonctionner à des températures élevées dans un environnement corrosif, comprend successivement empilés un substrat (4), un revêtement sélectif solaire (6) configuré pour absorber une grande partie du rayonnement solaire tout en réémettant le moins possible de rayonnement thermique infrarouge aux températures élevées lorqu'il n'est pas corrodé, et une couche barrière antocorrosion (8).

La couche barrière anticorrosion (8) est une couche de passivation épaisse, stable thermiquement, ayant un faible indice optique de réfraction et optiquement transparente au rayonnement solaire, l'épaisseur étant ajustée en fonction de la température de fonctionnement et de l'efficacité du troisième matériau pour empêcher la diffusion d'éléments constitutifs de l'environnement corrosif.

Fig. 1

EP 2 963 356 A1

## Description

La présente invention concerne des absorbeurs solaires sélectifs pouvant être utilisés à haute température et sous air dans des applications solaires comme celles de la production de l'électricité dans les centrales solaires, de la production de chaleur ou d'eau chaude dans les habitations.

La présente invention concerne des absorbeurs solaires sélectifs qui utilisent des revêtements sélectifs surfaciques qui doivent fonctionner à des températures élevées dans des environnments corrosifs contenant par exemple de l'oxygène, et un procédé de fabrication de tels absorbeurs solaires.

Les absorbeurs solaires sélectifs sont très utilisés dans le domaine du solaire thermique où ils permettent d'absorber le rayonnement solaire visible et de réémettre très peu de rayonnement infra-rouge.

Comme décrit dans le rapport de C. E. Kennedy, intitulé "Review of mid-to-high-temperature solar selective absorber material", publié en juillet 2002 par le National Renewable Energy Laboratory sous la référence NREL/TP-520-31267(2002), plusieurs types de revêtements sélectifs ont été étudiés et développés pour l'utilisation de l'énergie solaire en tant que source d'énergie renouvelable pour diverses applications. Le revêtement sélectif doit absorber le maximum de rayonnement solaire dans la plage des longueurs d'ondes comprises entre 0,3 $\mu$m et 2,5 $\mu$m environ tout en réémettant le moins possible de rayonnement thermique infrarouge, les longueurs d'ondes de la bande infrarouge étant supérieures à 2,5 $\mu$m. Du point de vue optique, ceci se traduit par une réflectivité, désignée par la suite par la lettre R, minimale voire nulle sur le spectre solaire, et maximale voire totale, c'est-à-dire égale à 1, dans le domaine infrarouge en considérant une transmission, désignée par la suite par la lettre T, nulle. L'absorption, désignée par la lettte $\alpha$, et l'émissivité thermique infrarouge, désignée par la lettre $\varepsilon$, sont alors calculées à partir des relations respectives décrites ci-dessous.

$$\alpha = 1 - R \qquad \text{(équation #1)}$$

$$\varepsilon = 1 - R \qquad \text{(équation #2)}$$

En considérant le spectre du rayonnement solaire, normalisé dans la bande des longueurs d'onde comprises entre 0,3 $\mu$m et 2,5 $\mu$m environ, et l'émission infrarouge normalisée d'un corps noir à différentes températures, par exemple 300°C, 400°C et 500°C, on remarque que l'augmentation de la température entraîne non seulement un rapprochement du spectre du corps noir vers le rayonnement solaire, mais également une augmentation de l'intensité infrarouge émise. Les absorbeurs solaires doivent ansi présenter de bonnes sélectivités optiques et être résistants à hautes températures.

De manière connue comme décrit dans le rapport de C. E. Kennedy déjà cité ou dans l'article de N. Selvakumar et al., 'Review of physical vapor deposited (PVD) spectrally selective coatings for mid- and high-temperature solar thermal applications', Solar Energy Materials & Solar Cells 98 (2012) 1-23, il existe différents types de revêtements sélectifs constitués majoritairement par un empilement de couches minces. Les empilements peuvent être composés à la fois par une succession de couches métalliques, semi-conductrices et diélectriques, homogènes ou composites comme inclusion de particules métalliques dans une matrice diélectrique par exemple sur un substrat métallique ou non. Les différentes couches successives du revêtement doivent présenter des propriétés optiques et avoir des dimensions géométriques bien spécifiques pour l'optimisation de la sélectivité optique entre l'absorption et l'émissivité infrarouge.

Une voie alternative aux empilements en couches minces est la structuration d'un matériau dans le plan pour former un cristal photonique. Un cristal photonique est par voie d'excellence le moyen idéal pour le contrôle de mode(s) optique(s) dans une structure. Les réalisations de ce type de structures sont principalement théoriques et limités à des démonstrations R&D en laboratoire comme décrit dans l'artice de Eden Rephaeli et al, « Tungsten black absorber for solar light with wide angular opération range », Applied Physics Letters 92, 211107 _2008.

Quelle que soit la performance de sélectivité optique, un critère important pour l'exploitation d'un absorbeur solaire sélectif, et plus particulièrement dans une centrale solaire à concentration (CSP : Concentrated Solar Power en anglais), est la température maximale de stabilité à laquelle il peut être utilisé. En particulier, la réalisation d'absorbeurs sélectifs stables à haute température, c'est-à-dire à des températures supérieures à 400°C, et fonctionnant dans un environnement contenant de l'air, constitue un enjeu économique et technique majeur pour les centrales solaires à concentration CSP.

Les absorbeurs solaires en couches minces actuels ne sont malheureusement stables à l'air libre qu'à moyenne température, c'est à dire à des températures inférieures à 400°C. Cette limitation en température de fonctionnement des absorbeurs à l'air libre est liée à l'absence ou à la conception d'une barrière anti-oxydation ou de diffusion à l'oxygène pas assez efficace pour protéger le revêtement sélectif vis-à-vis d'une atmosphère oxydante.

En conséquence, les absorbeurs solaires sont exploités sous vide dans les installations CSP afin de les protéger contre l'oxydation et leur permettre de fonctionner à hautes températures, ce qui génère un surcoût pour ces installations.

Le problème technique est de concevoir et fabriquer des absorbeurs stables à haute température pouvant fonctionner dans des environnements contenant de l'air, et plus généralement des environnements corrosifs dans lesquels d'autres réactions corrosives peuvent avoir lieu provenant par exemple de l'attaque par les sels, les pluies acides ou toutes autres particules corrosives.

A cette fin, l'invention a pour objet un absorbeur solaire thermique sélectif apte à fonctionner à des températures élevées dans un environnement corrosif.

Selon l'invention, un absorbeur solaire thermique sélectif apte à fonctionner à des températures élevées dans un environnement corrosif, comprend successivement empilés :

un substrat, constitué d'une première épaisseur d'un premier matériau ;
un revêtement sélectif solaire d'une deuxième épaisseur d'un deuxième matériau, configuré pour absorber une grande partie du rayonnement solaire tout en réémettant le moins possible de rayonnement thermique infrarouge aux températures élevées lorqu'il n'est pas corrodé ; et
une couche barrière antocorrosion d'une troisième épaisseur d'un troisième matériau ;
absorbeur remarquable en ce que
la couche barrière anticorrosion est une couche de passivation épaisse, stable thermiquement, ayant un faible indice optique de réfraction et optiquement transparente au rayonnement solaire, l'épaisseur étant ajustée en fonction de la température de fonctionnement et de l'efficacité du troisième matériau pour empêcher la diffusion d'éléments constitutifs de l'environnement corrosif.

Suivant des modes particuliers de réalisation, l'absorbeur solaire thermique sélectif comporte l'une ou plusieurs des caractéristiques suivantes, prises seules ou en combinaison :

- Le revêtement solaire sélectif présente une faible réflectivité sur le spectre solaire et une forte réflectivité dans l'infrarouge pour assurer une absorption élevée du rayonnement solaire et une émissivité infrarouge faible, une longueur d'onde de coupure $\lambda_c$ entre une zone d'absorption et une zone d'émissivité infrarouge dépendant de la température de fonctionnemnt élevée souhaitée ;
- la longueur d'onde de coupure $\lambda_c$ est comprise entre 1 $\mu$m et 3 $\mu$m ;
- l'indice de réfraction de la couche barrière anticorrosion est inférieure ou égal à 2 sur la gamme des longueurs d'onde comprises entre 0,3 $\mu$m et 10 $\mu$m et la troisième épaisseur est ajustée de telle sorte que sa transmittance T soit supérieure ou égale à 90%, de préférence supérieure ou égale à 92%, et encore plus de préférence supérieure ou égale à 95% ou 97% ;
- la couche barrière anticorrosion est transparente aux longueurs d'onde du spectre solaire comprises entre 0,3 $\mu$m et 2,5 $\mu$m, et transparente au rayonnement infrarouge pour des longueur d'ondes comprise entre 2,5 $\mu$m et au moins 10 $\mu$m ;
- l'épaisseur de réfraction de la couche barrière anticorrosion est supérieure ou égale à 0,5 $\mu$m, par exemple égale à 1 $\mu$m, 2,5 $\mu$m ou 5 $\mu$m, la troisième épaisseur minimale requise dépendant du troisième matériau, de l'environnement corrosif et de la température de fonctionnement souhaitée ;
- le troisième matériau dans lequel est réalisé la couche de passivation est compris dans l'ensemble des oxydes, des nitrures, des oxynitures et des oxydes complexes ;

les oxydes sont compris dans l'ensemble formé par l'alumine ($Al_2O_3$), l'oxyde de silicium ($SiO_2$), l'oxyde de zirconium, ($ZrO_2$), le trioxyde de bore ($B_2O_3$),
le nitrure est du nitrute de silicium ($Si_3N_4$),
les oxynitrures sont compris dans l'ensemble formé par l'oxyniture de silicium ($SiON$), l'oxynitrure d'aluminium ($AlON$),
les oxydes complexes sont compris dans l'ensemble formé par le spinel ($MgAl_2O_4$), la calcite ($CaCO_3$) et la mullite ($3Al_2O_3{:}2SiO_2$) ;

- la couche de passivation anticorrosion est constituée soit par un seul matériau formant une barrière anticorrosion homogène, soit par un matériau composite formé par un mélange d'au moins deux matériaux ;
- le ou les composés de la couche barrière anticorrosion est ou sont en proportion stoechiométrique ;
- la couche barrière anticorrosion est du $SiO_2$ ou du $SiO_x$ avec x différent de 2 ; ou du $Al_2O_3$ ou $Al_xO_y$ avec x/y différent de 2/3 ;
- soit le deuxième matériau du revêtement sélectif est monocouche et le matériau du substrat est choisi de sorte que l'ensemble bicouches formé par le substrat et la couche unique du revêtement présente la propriété de sélectivité souhaitée ; soit le deuxième matériau du revêtement sélectif est un matériau multicouches de matériaux différents de préférence ayant un nombre de couches supérieur ou égal à 3 ;
- le revêtement sélectif consiste en un empilement en partant du substrat de première, deuxième, troisième couches minces de tungstène (W), de nitrure d'aluminium (AlN), de nitrure de titane-aluminium (TiAlN) et d'une quatrième couche de nitrure d'aluminium (AlN) ;
- les épaisseurs des première, deuxième, troisième et quatrième couches sont respectivement égales à 200 nm, 50 nm, 25 nm et 70 nm.

L'invention a également pour objet un procédé de fabrication d'un absorbeur solaire thermique sélectif apte à fonctionner à des températures élevées dans un environnement corrosif.

Avantageusement, ce procédé comprend, exécutées successivement, les étapes consistant à :

Fournir un substrat, constitué d'une première épaisseur d'un premier matériau; puis

Déposer sur le substrat un revêtement sélectif solaire d'une deuxième épaisseur d'un deuxième matériau, configuré pour absorber une grande partie du rayonnement solaire tout en réémettant le moins possible de rayonnement thermique infrarouge aux températures élevées lorsqu'il n'est pas corrodé ; ensuite

Déposer une couche barrière antocorrosion d'une troisième épaisseur d'un troisième matériau ;

Procédé remarquable en ce que

la couche barrière anticorrosion est une couche de passivation épaisse, stable thermiquement, ayant un faible indice optique de réfraction et optiquement transparente au rayonnement solaire,

et l'épaisseur est ajustée en fonction de la température de fonctionnement et de l'efficacité du troisième matériau pour empêcher la diffusion d'éléments constitutifs de l'environnement corrosif.

Suivant un mode particulier de réalisation, dans le procédé de fabrication d'un absorbeur solaire thermique sélectif, les étapes de dépôt sont réalisées à l'aide d'une ou plusieurs techniques de dépôt, prises seules ou en combinaison, comprises dans l'ensemble des techniques de dépôt physique en phase vapeur (PVD), des techniques de dépôt chimique en phase vapeur, des techniques de dépôt par jet et l'électrodéposition.

L'invention sera mieux comprise à la lecture de la description de plusieurs formes de réalisation qui vont suivre, données uniquement à titre d'exemples et faites en se référant aux dessins dans lesquels ;

La Figure 1 est une vue schématique générale multicouches d'un absorbeur solaire thermique de l'invention ;

La Figure 2 est une vue d'un mode de réalisation particulier préféré de l'absorbeur solaire thermique de la Figure 1 ;

Les Figures 3A à 3D sont des vues comparatives de la performance en termes de réflectivité du revêtement sélectif W/AlN/TiAlN/AlN de la Figure 2 et de celle du même revêtement surmonté d'une épaisseur différente de couche de passivation en alumine prenant respectivement les valeurs 500 nm, 1 $\mu$m, 5 $\mu$m, 10 $\mu$m ;

La Figure 4 est un ordinogramme d'un procédé général de fabrication d'un absorbeur solaire thermique des Figures 1 et 2.

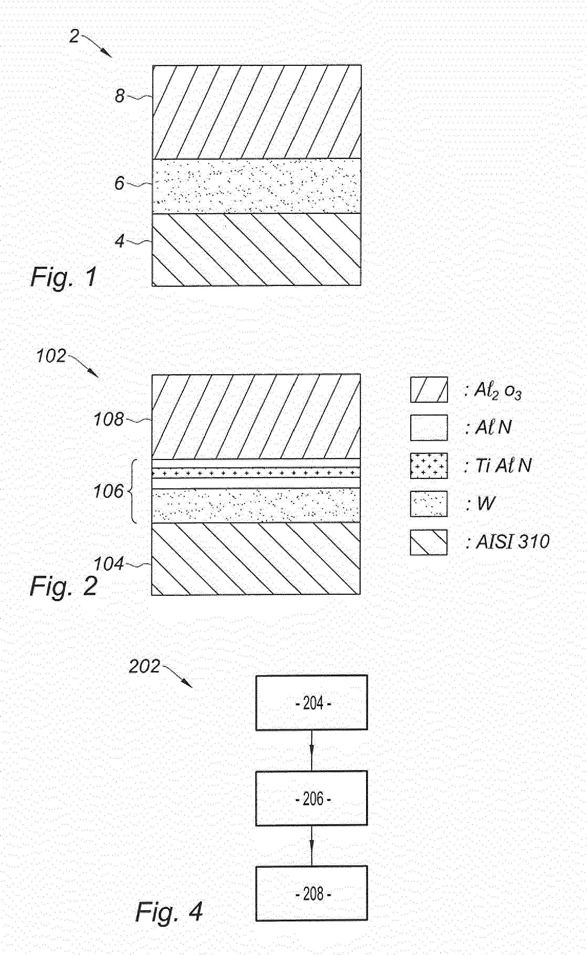

Suivant la Figure 1, un absorbeur solaire thermique sélectif 2, apte à fonctionner à des températures élevées dans un environnement corrosif, comprend un ensemble de couches successivement empilées formant respectivement depuis le bas vers le haut sur la Figure 1, un substrat 4, un revêtement sélectif solaire 6, et une couche barrière anticorrosion 8.

Le substrat 4 est constitué d'une première épaisseur d'un premier matériau.

Le revêtement sélectif solaire 6 est constitué d'une deuxième épaisseur d'un deuxième matériau, configuré pour absorber une grande partie du rayonnement solaire tout en réémettant le moins possible de rayonnement thermique infrarouge aux températures élevées lorsqu'il n'est pas corrodé.

Des températures élevées sont des températures supérieures ou égales à 400°C, de préférence supérieures ou égales à 450°C.

La couche barrière anticorrosion 8, constituée d'une troisième épaisseur d'un troisième matériau, est une couche de passivation épaisse. Le troisième matériau est stable thermiquement, possède un faible indice optique de réfraction et non absorbant idéalement pour rendre la couche barrière optiquement transparente au rayonnement solaire même lorsqu'elle est épaisse. La troisième épaisseur est ajustée en fonction de la température de fonctionnement et de l'efficacité du troisième matériau pour empêcher la diffusion d'éléments constitutifs de l'environnement corrosif.

Ainsi, l'efficacité de la fonction anticorrosion dépend non seulement des propriétés intrinsèques du matériau (résistance à l'oxydation et/ou à la diffusion de l'oxygène par exemple) mais également de l'épaisseur de la couche de protection, et ainsi la durabilité du revêtement sélectif peut être améliorée par un choix judicieux de l'épaisseur de la couche de protection en fonction de la température d'utilisation visée.

L'objet de la présente invention consiste donc à l'emploi d'une couche anticorrosion épaisse qui tire profit de l'influence du facteur géométrique qu'est l'épaisseur de la couche sur la résistance à la corrosion. En particulier, la diffusion de l'oxygène jusqu'au revêtement sélectif par tout élément susceptible d'en être le vecteur (air, gaz, eau, vapeur,...) peut être éliminée ou limitée pour préserver le revêtement sélectif de l'oxydation.

Il est ainsi possible de réaliser un absorbeur sélectif avec une couche de protection épaisse efficace pour une utilisation à hautes températures sous atmosphères oxydantes en particulier à l'air.

Selon l'invention, l'objet consiste donc en la réalisation d'une couche de passivation anticorrosion épaisse, de faible indice optique de réfraction et non absorbante idéalement sur un revêtement sélectif présentant les caractéristiques d'un absorbeur solaire.

Le faible indice de réfraction et la transparence de la couche de passivation permettent d'avoir une réflectivité d'interface faible avec le milieu environnant, par exemple l'air ambiant, et d'assurer une transmission maximale du rayonnement solaire vers le revêtement sélectif.

Dans ces conditions, la caractéristique optique qu'est la réflectivité de l'absorbeur complet peut être approximativement assimilée au produit de la transmission de la couche de passivation et de la réflectivité du revêtement sélectif.

En s'affranchissant de toute contrainte géométrique liée aux exigences optiques pour la couche de passivation, l'épaisseur de la couche de passivation est dorénavant fixée seulement en fonction de la température d'utilisation visée du revêtement sélectif et de son efficacité face à la diffusion de l'oxygène et/ou d'autres éléments corrosifs prééterminés.

Le revêtement solaire sélectif 6 présente une faible réflectivité sur le spectre solaire et une forte réflectivité dans l'infrarouge pour assurer une absorption élevée du rayonnement solaire et une émissivité infrarouge faible. La longueur d'onde de coupure $\lambda_c$ qui sépare la zone d'absorption et la zone d'émissivité infrarouge dépend de la température de fonctionnement élevée souhaitée. Pour un absorbeur sélectif idéal ou théorique, la longueur d'onde de coupure caractérise le point de transition verticale entre l'absorption et l'émissivité. Pour un absorbeur réel, on observe plutôt une zone de transition avec une certaine largeur entre la zone d'absorption et la zone d'émissivité. La longueur d'onde de coupure pour un absorbeur réel correspond à la longueur d'onde pour laquelle la réflectivité est égale à la moitié de la différence des réflectivités moyennes sur les plages d'absorption et d'émissivité.

La longueur d'onde de coupure $\lambda_c$ est comprise entre 1 $\mu$m et 3 $\mu$m.

L'indice de réfraction de la couche barrière anticorrosion est inférieure ou égal à 2, de préférence à 1,8 sur la gamme des longueurs d'onde comprises entre 0,3 $\mu$m et 10 $\mu$m, et au-delà de préférence jusqu'à 15 $\mu$m.

La couche barrière anticorrosion est transparente aux longueurs d'onde du spectre solaire comprises entre 0,3 $\mu$m et 2,5 $\mu$m, et transparente au rayonnement infrarouge pour des longueur d'ondes comprise entre 2,5 $\mu$m et au moins 10 $\mu$m. De préférence, la troisième épaisseur est ajustée de telle sorte que sa transmittance, désignée par T, soit supérieure à au moins 90%, de préférence par valeurs croissantes supérieure à 92%, 95% ou 97%.

L'épaisseur de la couche barrière anticorrosion est supérieure ou égale à 0,5 $\mu$m, par exemple égale à 1 $\mu$m, 2,50 $\mu$m, 5 $\mu$m ou 10 $\mu$m, la troisième épaisseur minimale requise dépendant du troisième matériau, de l'environnement corrosif et de la température de fonctionnement souhaitée.

Le troisième matériau dans lequel est réalisé la couche de passivation est compris dans l'ensemble des oxydes, des nitrures, des oxynitures et des oxydes complexes.

Les oxydes sont compris dans l'ensemble formé par l'alumine ($Al_2O_3$), l'oxyde de silicium ($SiO_2$), l'oxyde de zirconium ($ZrO_2$), le trioxyde de bore ($B_2O_3$).

Un nitrure est par exemple du nitrude de silicium ($Si_3N_4$),

Les oxynitrures sont compris dans l'ensemble formé parmi l'oxyniture de silicium (SiON), l'oxynitrure d'aluminium (AlON).

Les oxydes complexes sont compris dans l'ensemble formé par le spinel ($MgAl_2O_4$), la calcite ($CaCO_3$) et la mullite ($3Al_2O_3{:}2SiO_2$).

La couche de passivation anticorrosion est constituée soit par un seul matériau formant une barrière anticorrosion homogène, soit par un matériau composite formé par un mélange d'au moins deux matériaux comme par exemple un mélange d'oxydes $Al_2O_3/SiO_2$ ou $Al_2O_3/ZrO_2$, soit par un multicouche par exemple une couche de $Al_2O_3$ au dessus d'une couche de $SiO_2$.

La couche barrière anticorrosion est par exemple du $SiO_2$ ou du $SiO_x$ avec x différent de 2, ou du $Al_2O_3$ ou $Al_xO_y$ avec x/y différent de 2/3.

La structure de base de la passivation anti-oxydation à hautes températures diffère ainsi selon que la couche anticorrosion est un oxyde ou pas. Dans le premier cas, il s'agit d'une barrière de diffusion oxygène essentiellement. Les oxydes constituent généralement une barrière de diffusion d'oxygène protégeant et/ou ralentissant l'oxydation des couches adjacentes. L'alumine est un oxyde connu pour jouer un rôle de barrière à l'oxydation efficace en surface des éléments où elle se retrouve en proportion adéquate. Dans le second cas, il s'agit de réaliser une couche barrière oxygène 'ferme' avec un matériau connu pour sa forte résistance à l'oxydation. C'est le cas par exemple du nitrure de silicium et des oxynitrures. Dans ce dernier cas, il convient que la couche écran ainsi que son produit d'oxydation répondent aux critères optiques évoqués précédemment concernant l'indice de réfraction qui doit être faible sur toute la gamme de longueur d'onde entre 0,3 $\mu$m et 15 $\mu$m, et l'absorption qui doit être faible entre 0,3 $\mu$m et 10$\mu$m.

Dans une première configuration, le deuxième matériau du revêtement sélectif est une monocouche et le matériau du substrat est choisi de sorte que l'ensemble bicouches formé par le substrat et la couche unique du revêtement présente la propriété de sélectivité souhaitée.

Dans une deuxième configuration, le deuxième matériau du revêtement sélectif est un matériau multicouches de matériaux différents de préférence ayant un nombre de couches supérieur ou égal à 3.

Selon la Figure 2 et un mode de réalisation préférée de l'invention, un absorbeur solaire thermique 102 comprend à l'instar de l'absorbeur solaire 2, un substrat, un revêtement sélectif, une barrière anti-corrosion, ici respectivement désignés par les références numériques 104, 106, 108.

Le substrat 104 est ici un substrat acier inoxydable AISI 310. Il faut signaler ici que la nature du substrat 104 importe peu dans la démarche globale et que les empilements proposées pour les absorbeurs solaires thermiques 2, 102 sont réalisables sur tous types de substrats de matériaux purs ou d'alliages.

Le revêtement sélectif 106 consiste en un empilement de couches minces de tungstène (W), de nitrure d'aluminium (AIN), de nitrure de titane-aluminium (TiAIN) et d'une dernière couche de nitrure d'Aluminium (AIN). On a choisi un empilement successif de 200 nm de W, de 50 nm d'AIN, de 25 nm de TiAIN et de 70 nm d'AIN pour ce revêtement sélectif.

La couche de tungstène (W) sert de réflecteur infrarouge tandis que l'empilement AIN(50nm)/TiAIN(25nm)/AIN(70nm) assure l'obtention d'une bonne sélectivité entre l'absorption du rayonnement solaire et l'émission infrarouge. La dernière couche AIN assure également un rôle antireflet permettant de maximiser l'absorption au mieux dans le revêtement sélectif.

La barrière anti-corrosion 108 est une couche de passivation pour laquelle le troisième matériau choisi est ici de l'alumine. L'alumine est un oxyde connu pour jouer un rôle de barrière à l'oxydation efficace en surface des éléments où elle se retrouve en proportion adéquate. Elle a un faible indice de réfraction avec une valeur moyenne autour de 1,75 et reste transparente.

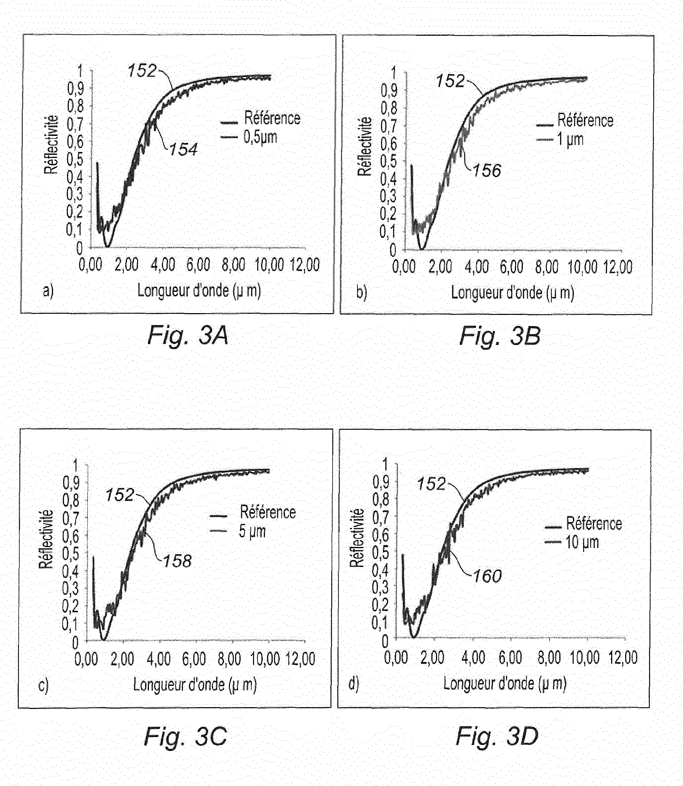

La courbe de réflectivité 152 du revêtement 106 formé par l'empilement W/AIN/TiAIN/AIN est comparée aux courbes de réflectivité 154, 156, 158, 160 du même revêtement surmonté par respectivement 500 nm, 1000 nm, 5 μm, et 10 μm d'alumine (Al$_2$O$_3$) sur les Figures 3A, 3B, 3C, 3D correspondant. On peut noter sur ces Figures 3A-D que la sélectivité est globalement maintenue et ce indépendamment de l'épaisseur de la couche de passivation. L'aspect irrégulier des courbes avec la couche de passivation d'alumine résulte de la prise en compte de la perte de cohérence optique du rayonnement solaire incident dans la couche de protection du fait de sa grande épaisseur.

Le revêtement sélectif consiste en un empilement en partant du substrat de première, deuxième, troisième couches minces de tungstène (W), de nitrure d'aluminium (AIN), de nitrure de titane-aluminium (TiAIN) et d'une quatrième couche de nitrure d'aluminium (AIN).

Suivant la Figure 4, un procédé de fabrication 202 d'un absorbeur solaire thermique sélectif multicouches, apte à fonctionner à des températures élevées dans un environnement corrosif, comprend un ensemble d'étapes 204, 206, 208, exécutées successivement.

Dans une première étape 204, il est fourni un substrat, constitué d'une première épaisseur d'un premier matériau.

Puis, dans une deuxième étape 206, un revêtement sélectif solaire d'une deuxième épaisseur d'un deuxième matériau est déposé sur le substrat. Le deuxième matériau est configuré pour absorber une grande partie du rayonnement solaire tout en réémettant le moins possible de rayonnement thermique infrarouge aux températures élevées lorsqu'il n'est pas corrodé.

Ensuite, dans une troisième étape 208, une couche barrière anticorrosion d'une troisième épaisseur d'un troisième matériau est déposé un revêtement sélectif solaire. La couche barrière anticorrosion est une couche de passivation épaisse, stable thermiquement, ayant un faible indice optique de réfraction et optiquement transparente au rayonnement solaire, et la troisième épaisseur est ajustée en fonction de la température de fonctionnement et de l'efficacité du troisième matériau pour empêcher la diffusion d'éléments constitutifs de l'environnement corrosif.

Les étapes de dépôt sont réalisées à l'aide d'une ou plusieurs techniques de dépôt, prises seules ou en combinaison, comprises dans l'ensemble des techniques de dépôt physique en phase vapeur (PVD), des techniques de dépôt chimique en phase vapeur, des techniques de dépôt par jet et l'électrodéposition. Les techniques de dépôt physique en phase vapeur (PVD) se déclinent en l'Evaporation, le PVD plasma, l'Ebeam et l'EB-PVD. Les techniques de dépôt chimique en phase vapeur se déclinent en le CVD, PECVD, LPCVD,.... Les techniques de dépôt par jet incluent les techniques de projection, peinture. On peut combiner ces différents techniques pour tirer avantage de leurs caractéristiques respectifs pour un dépôt contrôlé des couches minces du revêtement sélectif par exemple et un dépôt rapide de la couche de passivation avec des épaisseurs plus considérables.

Un exemple particulier de réalisation de l'invention a été décrit comportant un empilement de couches W/AIN/TiAIN/AIN comme revêtement sélectif. On peut envisager que ce revêtement soit réalisé avec d'autres matériaux et avec un nombre différent de couches. En particulier le revêtement sélectif peut être composé au minimum de deux couches (y compris le substrat). L'avantage d'un revêtement de plus de 2 couches, si celui-ci est correctement dimensionné, est une meilleure sélectivité optique. On dispose en effet plus de degré de liberté de contrôle de la sélectivité avec plusieurs couches. La présente proposition d'invention est également applicable sur les absorbeurs solaires à « cristaux photoniques ».

Il est également possible d'envisager une double ou multiple barrière anticorrosion en fonction des sources d'oxygène et /ou des éléments corrosif. L'efficacité de la barrière anti-oxydation n'est pas le même pour un matériau selon que l'oxygène est apporté par un gaz ou un liquide. Ainsi on peut avoir un système bicouche avec une couche barrière oxydation pour les sources liquides, comme par exemple la vapeur d'eau, et une autre pour les sources gazeuses, comme par exemple l'air. Il est à remarquer que même si la structure proposée a été conçue pour augmenter la résistance à l'oxydation en particulier, le principe de conception reste applicable pour l'augmentation de la résistance des absorbeurs thermiques face à d'autres dégradations comme la corrosion par les sels, les pluies acides notamment.

Un point clé de la présente invention est de tirer profit d'un faible indice de réfraction de la couche de passivation pour s'assurer d'une faible réflectivité du rayonnement solaire à l'interface avec le milieu environnant.

Afin de minimiser d'avantage cette réflectivité, il est possible de terminer ou de surmonter la couche épaisse anticorrosion avec une succession de couches minces répondant de façon générale aux mêmes critères optiques que ceux de ladite couche épaisse anticorrosion. Cela est réalisable par exemple par le dépôt d'une succession de fines couches d'oxydes différents ou d'une couche poreuse à la surface qui aurait un indice effectif plus faible que le matériau de passivation réel.

De manière complémentaire à une fonction de protection contre la corrosion en général et l'oxydation en particulier, la couche de passivation épaisse assure une fonction de barrrière thermique efficace de l'absorbeur solaire et constitue en alternative complète au système sous vide classique utilisant un tube en verre pour assurer non seulement les fonctions de transmission optique et d'anticorrosion, mais également les fonctions de limitation des pertes thermiques.

Il est rappelé que dans les centrales solaires thermiques à concentration, la montée en température de fonctionnement est l'un des leviers principaux pour l'augmentation du rendement des installations. Malheureusement cette montée en température est handicapée par plusieurs défis technologies parmi lesquels la tenue en températures des absorbeurs solaires. Beaucoup de revêtements absorbeurs disponibles, commercialement disponibles ou non, ne résistent pas à hautes températures (c'est-à-dire des températures supérieures à 400°C) à l'air. Comme il a déjà été indiqué, l'emploi d'absorbeurs utilisés sous vide dans un tube protecteur en verre comme dans les installations solaires paraboliques, représente un coût d'investissement important. Toutefois pour remplacer les absorbeurs solaires utilisés sous vide à l'aide d'un tube en verre, les fonctions suivantes du tube en verre doivent être réalisées de manière cumumative :

• (a) assurer une transmission maximale du rayonnement solaire vers l'absorbeur afin qu'il soit transformé en chaleur ;
• (b) éliminer le contact entre l'absorbeur et l'oxygène ou tout élément corrosif afin de préserver la stabilité thermique de l'absorbeur ;
• (c) limiter les pertes thermiques convectives avec l'atmosphère grâce à la faible conductivité thermique ;
• (d) absorber l'énergie à de grandes longueurs d'onde dans l'infrarouge et conduire à un effet de serre par absorption du rayonnement infrarouge émis par l'absorbeur, permettant ainsi de limiter en partie les pertes thermiques radiatives et de gagner en temps de montée en température.

Comme il a été vu, les deux premières fonctions (a), (b) sont assurées par la couche de passivation épaisse. Les propriétés optiques et géométriques de la couche de passivation ont été ajustées pour assurer une bonne transmission du rayonnement solaire vers l'absorbeur tout en apportant une protection anticorrosion. De plus, la sélectivité optique est globalement préservée par l'utilisation de la couche de passivation épaisse selon l'invention.

Il est rappelé que différents matériaux ont été identifiés pour la réalisation de la couche de passivation. Parmi ceux-ci, on distingue :

- les oxydes : l'Alumine ($Al_2O_3$), la silice ($SiO_2$), la zircone ($ZrO_2$), le trioxyde de Bore ($B_3O_3$)...
- les nitrures : le nitrure de silicium ($Si_3N_4$)...
- les oxynitrures : l'oxynitrure de silicium ($SiON$), oxynitrure d'aluminium ($AlON$)...
- les oxydes complexes: le spinel ($MgAl_2O_4$), la calcite ($CaCO_3$)...

Les oxydes ou les composés d'oxydes sont connus également pour leur faible conductivité thermique. Plus particulièrement et comme décrit dans l'article de F. Cipri et al, "Electromagnetic and Mechanical Properties of Silica-Aluminosilicates Plasma Sprayed Composite Coatings". Journal of Thermal Spray Technology Volume 16(5-6) Mid-December 2007- 831, divers composés d'oxydes sont utilisés comme barrières thermiques dans des moteurs thermiques.

A titre d'exemple et sans exhaustivité, des barrières thermiques à base de mullite ($3Al_2O_3$- $SiO_2$), d'alumine ($Al_2O_3$), de l'oxyde de zircone stabilisé à l'yttrium sont rapportées dans les brevets WO 99/048837 et US 2004/0028941 A1.

Les couches de protection anticorrosion qui ne sont pas des oxydes comme le nitrure de silicium et les oxynitrures en s'oxydant en contact de l'air formeront une couche barrière thermique également. Il en résulte en cas d'une oxydation partielle de ces couches une structure bicouche aussi intéressante à la fois pour les fonctions de protection anti-oxydation et de barrière thermique.

La couche de protection épaisse de notre absorbeur est donc indirectement une barrière thermique pour la limitation des pertes convectives avec l'atmosphère. Les fonctions de protection contre l'oxydation et de barrière thermique sont interdépendantes. Schématiquement, la couche de protection épaisse est équivalente au vide.

Dans le cas de l'utilisation d'un tube en verre, l'effet de serre est provoqué par l'absorption par le vitrage ou le tube protecteur d'une partie du rayonnement infrarouge émis par l'absorbeur solaire. En effet, les verres ou oxydes sont transparents dans le visible et une grande partie de l'infrarouge, mais absorbants à de grandes longueurs typiquement au-dessus de 10 $\mu$m pour l'oxyde de silicium et pour alumine. Il en résulte qu'une partie de l'énergie thermique radiative émise par l'absorbeur est réabsorbée par le tube en verre provoquant une montée en température plus rapide qu'en absence de cet effet.

Dans notre cas de l'utilisation d'une couche de passivation épaisse, cet effet se produit également car le revêtement sélectif est enterré sous la couche de passivation et de protection. En conséquence, la couche de passivation épaisse selon l'invention permet d'assurer les quatre fonctions (a), (b), (c), (d) du système tube-vide protecteur décrit ci-dessus.

L'absorbeur solaire sélectif selon l'invention tel que décrit ci-dessus peut être exploité aussi dans un système sous vide pour relâcher les contraintes sur le système d'entretien du vide et/ou avoir un système résistant à l'oxydation qu'on peut protéger contre d'autres sources de corrosion et/ou de dégradation (vitrage anticorrosion par le sel par exemple).

## Revendications

1. Absorbeur solaire thermique sélectif apte à fonctionner à des températures élevées dans un environnement corrosif, comprenant successivement empilées ;

    un substrat (4) constitué d'un premier matériau, un revêtement sélectif solaire (6) constitué d'un deuxième matériau, une couche barrière anticorrosion (8) constituée d'un troisième matériau, **caractérisé en ce que** :

    la couche barrière anticorrosion (8) est une couche de passivation ayant un indice optique de réfraction inférieur ou égal à 2 sur la gamme de longueurs d'onde comprise entre 0,3 $\mu$m et 10 $\mu$m et étant transparente au rayonnement du spectre solaire dont la longueur d'onde est comprise entre 0,3 $\mu$m et 2,5 $\mu$m, et **en ce que** l'épaisseur de ladite barrière anticorrosion est supérieure ou égale à 0,5 $\mu$m.

2. Absorbeur solaire thermique sélectif selon la revendication 1, **caractérisé en ce que** ladite couche barrière anticorrosion (8) est également transparente au rayonnement dont la longueur d'onde est comprise entre 2,5 $\mu$m et 10 $\mu$m.

3. Absorbeur solaire thermique sélectif selon l'une quelconque des revendications précédentes, **caractérisé en ce que** ladite couche barrière anticorrosion (8) présente une transmittance supérieure ou égale à 90%.

4. Absorbeur solaire thermique sélectif selon l'une quelconque des revendications précédentes, **caractérisé en ce que** ledit revêtement sélectif solaire (6) présentant une zone d'absorption et une zone d'émissivité, la longueur d'onde de coupure entre ces deux zones est comprise entre 1 $\mu$m et 3 $\mu$m.

5. Absorbeur solaire thermique sélectif selon l'une quelconque des revendications précédentes, dans lequel le troisième matériau dans lequel est réalisé la couche de passivation est compris dans l'ensemble des oxydes, des nitrures, des oxynitrures et des oxydes complexes.

6. Absorbeur solaire thermique sélectif selon la revendication 5, dans lequel
les oxydes sont compris dans l'ensemble formé par l'alumine ($Al_2O_3$), l'oxyde de silicium ($SiO_2$), l'oxyde de zirconium, ($ZrO_2$), le trioxyde de bore ($B_2O_3$), un nitrure est du nitrure de silicium ($Si_3N_4$), les oxynitrures sont compris dans l'ensemble formé par l'oxynitrure de silicium (SiON), l'oxynitrure d'aluminium (AlON), les oxydes complexes sont compris dans l'ensemble formé par le spinel ($MgAl_2O_4$), la calcite ($CaCO_3$) et la mullite ($3Al_2O_3{:}2SiO_2$).

7. Absorbeur solaire thermique sélectif selon l'une quelconque des revendications précédentes, dans lequel
le ou les composés de la couche barrière anticorrosion est ou sont en proportion stoechiométrique.

8. Absorbeur solaire thermique sélectif selon les revendications 1 à 6, dans lequel la couche barrière anticorrosion est
du $SiO_2$ ou du $SiO_x$ avec x différent de 2 ; ou du $Al_2O_3$ ou $Al_xO_y$ avec x/y différent de 2/3.

9. Absorbeur solaire thermique sélectif selon l'une des revendications précédentes, **caractérisé en ce que** la couche barrière anticorrosion est constituée par un matériau composite formé par un mélange d'au moins deux matériaux, soit par un multicouche.

10. Absorbeur solaire thermique sélectif selon l'une quelconque des revendications précédentes, dans lequel le revêtement sélectif consiste en un empilement en partant du substrat de première, deuxième, troisième couches minces de tungstène (W), de nitrure d'aluminium (AlN), de nitrure de titane-aluminium (TiAlN) et d'une quatrième couche de nitrure d'aluminium (AlN).

11. Absorbeur solaire thermique sélectif selon la revendication 9, dans lequel les épaisseurs des première, deuxième, troisième et quatrième couches sont respectivement égales à 200 nm, 50 nm, 25 nm et 70 nm.

12. Procédé de fabrication d'un absorbeur solaire thermique sélectif apte à fonctionner à des températures élevées dans un environnement corrosif, comprenant exécutées successivement les étapes consistant à:

fournir un substrat (204) d'un premier matériau, déposer sur ce substrat un revêtement sélectif solaire (206) d'un deuxième matériau, déposer une couche barrière anticorrosion (208) d'un troisième matériau, **caractérisé en ce que** :

la couche barrière anticorrosion est une couche de passivation ayant un indice optique de réfraction inférieur ou égal à 2 sur la gamme de longueurs d'onde comprise entre 0,3 $\mu$m et 10 $\mu$m et étant transparente au rayonnement du spectre solaire dont la longueur d'onde est comprise entre 0,3 pm et 2,5 pm,

et **en ce que** l'épaisseur de ladite barrière anticorrosion est supérieure ou égale à 0,5 $\mu$m.

13. Procédé de fabrication d'un absorbeur solaire thermique sélectif selon la revendication 11, dans lequel les étapes de dépôt sont réalisées à l'aide d'une ou plusieurs techniques de dépôt, prises seules ou en combinaison, comprises dans l'ensemble des techniques de dépôt physique en phase vapeur (PVD), des techniques de dépôt chimique en phase vapeur, des techniques de dépôt par jet et l'électrodéposition.

Fig. 1

Fig. 2

Fig. 4

Fig. 3A

Fig. 3B

Fig. 3C

Fig. 3D

Europäisches
Patentamt

European
Patent Office

Office européen
des brevets

**RAPPORT DE RECHERCHE EUROPEENNE**

Numéro de la demande

EP 15 17 3705

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | SELVAKUMAR N ET AL: "Review of physical vapor deposited (PVD) spectrally selective coatings for mid- and high-temperature solar thermal applications", SOLAR ENERGY MATERIALS AND SOLAR CELLS, ELSEVIER SCIENCE PUBLISHERS, AMSTERDAM, NL, vol. 98, 20 octobre 2011 (2011-10-20), pages 1-23, XP028356529, ISSN: 0927-0248, DOI: 10.1016/J.SOLMAT.2011.10.028 [extrait le 2011-11-04] | 1-9, 11-13 | INV. F24J2/46 F24J2/48 |
| A | * alinéa [0003]; figure 11a * ----- | 10 | |
| Y | BARSHILIA HARISH ET AL: "Thermal stability of TiAlN/TiAlON/Si3N4 tandem absorbers prepared by reactive direct current magnetron sputtering", JOURNAL OF VACUUM SCIENCE AND TECHNOLOGY: PART A, AVS /AIP, MELVILLE, NY., US, vol. 25, no. 2, 28 février 2007 (2007-02-28), pages 383-390, XP012102592, ISSN: 0734-2101, DOI: 10.1116/1.2699425 * le document en entier * ----- | 1-9, 11-13 | DOMAINES TECHNIQUES RECHERCHES (IPC) F24J |
| A | WO 2009/107157 A2 (ENEA ENTE NUOVE TEC [IT]; ANTONAIA ALESSANDRO [IT]; ESPOSITO SALVATORE) 3 septembre 2009 (2009-09-03) * page 9, ligne 11 - page 10, ligne 23; figures 1,2 * ----- | 1-12 | |
| A | WO 2012/172505 A1 (AGENZIA NAZ PER LE NUOVE TECNOLOGIE L EN E LO SVILUPPO ECONOMICO SOSTE) 20 décembre 2012 (2012-12-20) * page 29, ligne 25 - page 31, ligne 20; figures 1-4 * ----- -/-- | 9 | |

Le présent rapport a été établi pour toutes les revendications

| Lieu de la recherche | Date d'achèvement de la recherche | Examinateur |
|---|---|---|
| La Haye | 28 août 2015 | Delval, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 15 17 3705

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2013/072731 A2 (TOYOTA MOTOR CO LTD [JP]; JAPAN FINE CERAMICS CT [JP]; TOYOTA JIDOSHOK) 23 mai 2013 (2013-05-23) * alinéa [0043]; figure 11a * ----- | 1-12 | |
| Y | DE 10 2011 083166 A1 (ARDENNE ANLAGENTECH GMBH [DE]) 28 mars 2013 (2013-03-28) * alinéa [0028]; figure 1 * ----- | 1-9, 11-13 | |
| Y | US 2002/073988 A1 (REICHERT WERNER [DE] ET AL) 20 juin 2002 (2002-06-20) * alinéas [0036], [0039]; figure 1 * ----- | 1-9, 11-13 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 28 août 2015 | Delval, Stéphane |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 17 3705

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-08-2015

| Document brevet cité au rapport de recherche | Date de publication | Membre(s) de la famille de brevet(s) | | Date de publication |
|---|---|---|---|---|
| WO 2009107157 A2 | 03-09-2009 | EP | 2245208 A2 | 03-11-2010 |
| | | WO | 2009107157 A2 | 03-09-2009 |
| WO 2012172505 A1 | 20-12-2012 | CN | 103782113 A | 07-05-2014 |
| | | EP | 2721353 A1 | 23-04-2014 |
| | | HK | 1197099 A1 | 02-01-2015 |
| | | KR | 20140050629 A | 29-04-2014 |
| | | US | 2014130794 A1 | 15-05-2014 |
| | | WO | 2012172505 A1 | 20-12-2012 |
| WO 2013072731 A2 | 23-05-2013 | CN | 103946645 A | 23-07-2014 |
| | | EP | 2780646 A2 | 24-09-2014 |
| | | JP | 5687606 B2 | 18-03-2015 |
| | | JP | 2013104617 A | 30-05-2013 |
| | | US | 2014305123 A1 | 16-10-2014 |
| | | WO | 2013072731 A2 | 23-05-2013 |
| DE 102011083166 A1 | 28-03-2013 | AUCUN | | |
| US 2002073988 A1 | 20-06-2002 | AT | 288057 T | 15-02-2005 |
| | | CN | 1368627 A | 11-09-2002 |
| | | DE | 20021644 U1 | 02-05-2002 |
| | | DE | 50105189 D1 | 03-03-2005 |
| | | DK | 1217315 T3 | 09-05-2005 |
| | | EP | 1217315 A1 | 26-06-2002 |
| | | ES | 2232557 T3 | 01-06-2005 |
| | | PT | 1217315 E | 31-03-2005 |
| | | US | 2002073988 A1 | 20-06-2002 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 99048837 A

- US 20040028941 A1

**Littérature non-brevet citée dans la description**

- **C. E. KENNEDY.** Review of mid-to-high-temperature solar selective absorber material. National Renewable Energy Laboratory, Juillet 2002
- **N. SELVAKUMAR et al.** Review of physical vapor deposited (PVD) spectrally selective coatings for mid- and high-temperature solar thermal applications. *Solar Energy Materials & Solar Cells,* 2012, vol. 98, 1-23

- **EDEN REPHAELI et al.** Tungsten black absorber for solar light with wide angular opération range. *Applied Physics Letters,* vol. 92
- **F. CIPRI et al.** Electromagnetic and Mechanical Properties of Silica-Aluminosilicates Plasma Sprayed Composite Coatings. *Journal of Thermal Spray Technology,* Décembre 2007, vol. 16 (5-6), 831